# EUROPÄISCHE PATENTSCHRIFT

(11) **EP 1 798 121 B1**
(45) Veröffentlichungstag und Bekanntmachung des Hinweises auf die Patenterteilung: **09.07.2008**
(21) Anmeldenummer: 06026058.5
(22) Anmeldetag: 16.12.2006
(51) Int. Cl.: B60R 21/34

(54) **Fussgängerschutzeinrichtung**
Pedestrian protection assembly
Dispositif de protection pour piétons

(30) Priorität: 16.12.2005 DE 102005060153
(43) Veröffentlichungstag der Anmeldung: 20.06.2007
(73) Patentinhaber: AUDI AG, 85045 Ingolstadt (DE)
(72) Erfinder: Dix, Norman, 85055 Ingolstadt (DE); Reuschel, Jens Dietmar, 85053 Ingolstadt (DE)
(74) Vertreter: Engelhardt, Harald

(56) Entgegenhaltungen:
- WO-A-20/04089702
- WO-A-20/05102793
- DE-A1- 10 254 733
- DE-A1-3102004 055 60
- DE-B3-2102004 027 78
- DE-U1-8202004 014 92

## Beschreibung

Die Erfindung bezieht sich auf eine Fußgängerschutzeinrichtung für ein Kraftfahrzeug mit einer Frontklappe, welche in eine Schutzposition bewegbar ist, in der zumindest die Hinterkante der Frontklappe angehoben ist, und wobei eine Vorrichtung den in der Schutzposition entstehenden Spalt zwischen der Hinterkante der Frontklappe und einer sich daran anschließenden Windschutzscheibe verschließt.

Bei den gattungsgemäßen Fußgängerschutzeinrichtungen wird der Spalt zwischen der Hinterkante der Frontklappe und der Windschutzscheibe bspw. durch einen Airbag verschlossen. Es gibt aber auch Lösungen, bei denen aus der Frontklappe ein Abdeckteil herausbewegt wird und den Spalt verschließt. Beide Lösungsvarianten sind insgesamt sehr aufwändig und erhöhen dadurch die Kosten für den Fußgängerschutz.

Eine Einrichtung nach dem Oberbegriff des Anspruchs 1 ist aus DE 20 2004 014 928 U1 bekannt.

Der Erfindung liegt die Aufgabe zugrunde, mit einfachen Mitteln sicherzustellen, dass bei aktivierter Fußgängerschutzeinrichtung der Spalt zwischen der Hinterkante der Frontklappe und der Windschutzscheibe verschlossen wird.

Diese Aufgabe wird durch die im Patentanspruch 1 angegebenen kennzeichnenden Merkmale im Zusammenwirken mit den oberbegrifflichen Merkmalen gelöst.

Gemäß der Erfindung wird durch ein einfach herzustellendes flächiges Bauteil, welches einerseits im Bereich der Hinterkante der Frontklappe und andererseits im gegenüberliegenden Bereich des unteren Windschutzscheibenrandes befestigt wird, zuverlässig der bei sich in Schutzposition befindlicher Frontklappe entstehende Spalt verschlossen. In seiner nicht aktiven Stellung liegt das flächige Bauteil mindestens einmal gefaltet unter der geschlossenen Frontklappe und wird erst dann, wenn die Hinterkante der Frontklappe angehoben wird, den entstehenden Spalt überbrückend gespannt.

Durch die erfindungsgemäße Vorrichtung wird das normale Öffnen und Schließen der Frontklappe nicht beeinträchtigt, da eine Schwenkbewegung zumindest des der Frontklappe zugewandten Abschnitts des flächigen Bauteiles über das durch die Faltung oder Abwinkelung des flächigen Bauteiles entstehende Scharnier bzw. durch eine Elastizität des Materials möglich ist.

Bevorzugt ist das flächige Bauteil durch ein reissfestes Gewebe gebildet. Ein solches Gewebe kann sich sehr gut den örtlichen Gegebenheiten anpassen, bspw. der Scheibenkrümmung folgen und auch ohne zusätzliche Maßnahmen eine Falte bilden.

Bevorzugt wird das flächige Bauteil zwischen seinen Befestigungsstellen über mindestens eine lösbare Verbindung im unteren Bereich der Windschutzscheibe oder einen sich daran nach unten anschließenden Karosseriebauteil derart fixiert, dass die Verbindung beim Bewegen der Frontklappe in ihre Schutzstellung gelöst wird. Durch diese zusätzliche Befestigung wird erreicht, dass ein großer Abschnitt des flächigen Bauteiles exakt fixiert ist und somit nicht störend in Erscheinung tritt. Der verbleibende Rest des flächigen Bauteiles ist ausreichend, um die Frontklappe öffnen zu können. Durch diese Ausgestaltung ergibt sich fast zwangsläufig, dass sich das flächige Bauteil im Bereich der zusätzlichen Fixierung abwinkelt.

Der durch die lösbare Verbindung am unteren Scheibenrand oder dem unteren Scheibenrahmen aufliegende Abschnitt des flächigen Bauteils kann die Verbindungsstelle zwischen beiden Bauteilen, etwa eine Klebung, abdecken. Eine ansonsten dafür eingesetzte Rasterlackierung auf dem Scheibenrand kann somit entfallen.

Bevorzugt wird die lösbare Verbindung durch mindestens einen Clip gebildet. Natürlich können dafür auch andere geeignete Verbindungstechniken Verwendung finden, die sicherstellen, dass sie ohne Zerstörung des flächigen Bauteils bei Aktivierung der Fußgängerschutzeinrichtung gelöst werden.

Alternativ zu der Verbindung durch einen Clip ist es möglich, eine elastisch nachgiebige Verbindung vorzusehen, die bei der normalen Öffnung der Frontklappe wirksam wird. Diese elastische Verbindung kann auch zum Tragen kommen, wenn die Frontklappe in die Schutzposition bewegt wird. In diesem Fall ist es jedoch auch denkbar, dass die elastische Verbindung nicht reversibel ist, sondem so bemessen ist, dass sie zerstört wird.

In weiterer Ausgestaltung der Erfindung können mehrere flächige Bauteile nebeneinander angeordnet sein. Durch diese Ausgestaltung können die flächigen Bauteile selbst einfacher ausgeführt und trotzdem eine gute Anpassung an bspw. gekrümmte Scheiben vorgenommen werden.

Besonders vorteilhaft ist, wenn das flächige Bauteil in seiner gespannten Lage einen Endanschlag für die angehobene Frontklappe bildet. Dadurch übernimmt das flächige Bauteil eine Zusatzfunktion; ansonsten dafür notwendige Maßnahmen zur Begrenzung der Haubenanhebung können entfallen.

Ein Ausführungsbeispiel der Erfindung ist in der Zeichnung dargestellt und wird nachfolgend näher beschrieben.

Es zeigen
- Figur 1: in schematischer Darstellung eine Fußgängerschutzeinrichtung in der nicht aktiven Stellung und
- Figur 2: die Fußgängerschutzeinrichtung aus Figur 1 wenn die Hinterkante der Frontklappe angehoben ist.

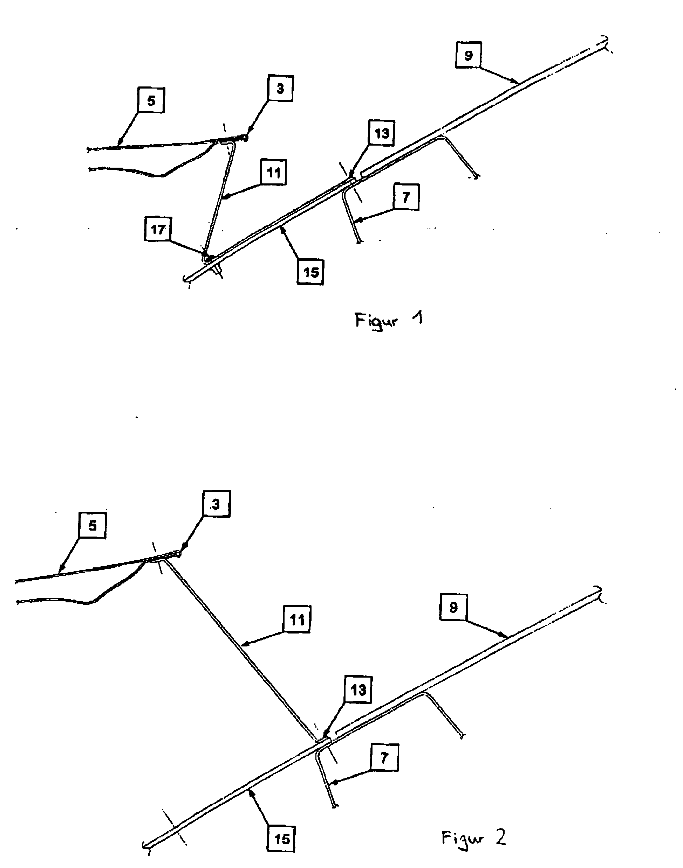

Figur 1 zeigt die Hinterkante 3 einer Frontklappe 5, die sich in Schließstellung befindet. An die Frontklappe 5 schließt sich nach hinten eine an einem Scheibenrahmen 7 befestigte Windschutzscheibe 9 an.

An der Hinterkante 3 der Frontklappe 5 ist ein Ende eines flächigen Bauteiles 11 befestigt. Das andere Ende ist an der mit 13 bezeichneten Stelle durch nicht gezeichnete Mittel am Scheibenrahmen 7 festgelegt. Außerdem ist das flächige Bauteil zwischen seinen Befestigungsstellen noch an einem sich an den Scheibenrahmen 7 nach unten anschließenden Karosserieteil 15 durch einen Clip 17 festgelegt. Diese Festlegung ist zusammen mit der Dimensionierung des flächigen Bauteiles 11 so getroffen, dass die Frontklappe 5 im normalen Betrieb geöffnet und geschlossen werden kann.

Figur 2 zeigt die Anordnung aus Figur 1, nach dem die Hinterkante 3 der Frontklappe 5 durch hier nicht gezeigte Maßnahmen zur Bildung einer Fußgängerschutzeinrichtung angehoben ist. Wie aus Figur 2 unmittelbar ersichtlich, wird dadurch das flächige Bauteil 11 zwischen seinen Befestigungsstellen gespannt und darüber hinaus ein Endanschlag für die Ausstellbewegung der Frontklappe 5 gebildet. Beim Spannen des flächigen Bauteils löst sich die Verbindung zwischen dem Clip 17 und dem ihn aufnehmenden Karosserieteil 15.

Durch das gespannte flächige Bauteil 11 wird der gesamte Spalt zwischen der Frontklappe 5 und der Windschutzscheibe 9 überbrückt, so dass sich darin keine Gliedmaßen oder Kleidungsstücke eines auftreffenden Fußgängers verfangen können.

## Patentansprüche

1. Fußgängerschutzeinrichtung für ein Kraftfahrzeug mit einer Frontklappe (5), welche in eine Schutzposition bewegbar ist in der zumindest die Hinterkante (3) der Frontklappe (5) angehoben ist, und wobei eine Vorrichtung den in der Schutzposition entstehenden Spalt zwischen der Hinterkante (3) der Frontklappe (5) und einer sich daran anschließenden Windschutzscheibe (9) verschließt, wobei im Bereich der Hinterkante (3) der Frontklappe (5) eine erste Seite eines flächiges Bauteils (11) befestigt ist und **dadurch gekennzeichnet, dass** die gegenüberliegende zweite Seite des flächigen Bauteils im Bereich des unteren Randes der Windschutzscheibe (9) fixiert ist, dass das flächige Bauteil (11) in der nicht aktiven Stellung zwischen seinen Befestigungsstellen zumindest einmal abgewinkelt ist, und dass das flächige Bauteil (11) bei angehobener Frontklappe (5) den Spalt zwischen der Hinterkante (3) der Frontklappe (5) und der Windschutzscheibe (9) überbrückend im wesentlichen gespannt verläuft.

2. Fußgängerschutzeinrichtung nach Anspruch 1, **dadurch gekennzeichnet, dass** das flächige Bauteil (11) durch ein reißfestes Gewebe gebildet ist,

3. Fußgängerschutzeinrichtung nach Anspruch 1 oder 2, **dadurch gekennzeichnet, dass** das flächige Bauteil (11) zwischen seinen Befestigungsstellen über mindestens eine lösbare Verbindung im unteren Bereich der Windschutzscheibe (9) oder einen sich daran nach unten anschließenden Karosseriebauteil (15) derart fixiert ist, dass die Verbindung beim Bewegen der Frontklappe (5) in ihre Schutzposition gelöst wird.

4. Fußgängerschutzeinrichtung nach Anspruch 3, **dadurch gekennzeichnet, dass** die lösbare Verbindung durch mindestens einen Clip (17) gebildet ist.

5. Fußgängerschutzeinrichtung nach einem der Ansprüche 1 bis 4, **dadurch gekennzeichnet, dass** mehrere flächige Bauteile (11) nebeneinander angeordnet sind.

6. Fußgängerschutzeinrichtung nach einem der Ansprüche 1 bis 5, **dadurch gekennzeichnet, dass** das flächige Bauteil (11) in seiner gespannten Lage einen Endanschlag für die angehobene Frontklappe (5) bildet.

## Claims

1. Pedestrian protection arrangement for a motor vehicle with a bonnet (5) which can be moved into a protective position in which at least the rear edge (3) of the bonnet (5) is raised, and wherein a device closes the gap produced between the rear edge (3) of the bonnet (5) and an adjoining windscreen (9) in the protective position, a first side of a flat component (11) being fastened in the region of the rear edge (3) of the bonnet (5), **characterised in that** the opposing second side of the flat component is fixed in the region of the lower edge of the windscreen (9), that the flat component (11) is bent at least once between its fastening points in the inactive position and that the flat component (11) extends in an essentially tensioned manner bridging the gap between the rear edge (3) of the bonnet (5) and the windscreen (9) when the bonnet (5) is raised.

2. Pedestrian protection arrangement according to claim 1, **characterised in that** the flat component (11) is formed by a tear-resistant fabric.

3. Pedestrian protection arrangement according to claim 1 or claim 2, **characterised in that** the flat component (11) is fixed between its fastening points by means of at least one releasable connection in the lower region of the windscreen (9) or a downwardly adjoining vehicle body part (15) in such a manner that the connection is released when the bonnet (5) moves into its protective position.

4. Pedestrian protection arrangement according to claim 3, **characterised in that** the releasable connection is formed by at least one clip (17).

5. Pedestrian protection arrangement according to one of claims 1 to 4, **characterised in that** several flat components (11) are arranged alongside one another.

6. Pedestrian protection arrangement according to one of claims 1 to 5, **characterised in that** the flat component (11) forms an end stop for the raised bonnet (5) in its tensioned position.

## Revendications

1. Dispositif de protection pour piétons pour un véhicule automobile avec une trappe avant (5) qui peut être déplacée dans une position de protection, dans laquelle au moins l'arête arrière (3) de la trappe avant (5) est relevée, et un dispositif fermant la fente apparue dans la position de protection entre l'arête arrière (3) de la trappe avant (5) et un pare-brise (9) s'y raccordant, un premier côté d'un composant (11) plan étant fixé dans la zone de l'arête arrière (3) de la trappe avant (5), **caractérisé en ce que** le second côté opposé du composant plan est fixé dans la zone du bord inférieur du pare-brise (9), **en ce que** le composant (11) plan est coudé au moins une fois dans la position non active entre ses points de fixation, et **en ce que** le composant (11) plan s'étend essentiellement tendu lorsque la trappe avant (5) est relevée de manière à couvrir la fente entre l'arête arrière (3) de la trappe avant (5) et le pare-brise (9).

2. Dispositif de protection pour piétons selon la revendication 1, **caractérisé en ce que** le composant (11) plan est formé par un tissu résistant à la déchirure.

3. Dispositif de protection pour piétons selon la revendication 1 ou 2, **caractérisé en ce que** le composant (11) plan est fixé entre ses points de fixation par le biais d'au moins une liaison détachable dans la zone inférieure du pare-brise (9) ou par le biais d'un composant de carrosserie (15) s'y raccordant vers le bas de telle sorte que la liaison soit détachée lors du déplacement de la trappe avant (5) dans sa position de protection.

4. Dispositif de protection pour piétons selon la revendication 3, **caractérisé en ce que** la liaison détachable est formée par au moins un clip-(17).

5. Dispositif de protection pour piétons selon l'une quelconque des revendications 1 à 4, **caractérisé en ce que** plusieurs composants (11) plans sont disposés les uns à côté des autres.

6. Dispositif de protection pour piétons selon l'une quelconque des revendications 1 à 5, **caractérisé en ce que** le composant (11) plan forme dans sa position tendue une butée de fin de course pour la trappe avant relevée (5).
